# EUROPÄISCHE PATENTSCHRIFT

(11) **EP 3 328 204 B1**
(45) Veröffentlichungstag und Bekanntmachung des Hinweises auf die Patenterteilung: **31.03.2021**
(21) Anmeldenummer: 16732944.0
(22) Anmeldetag: 20.06.2016
(51) Int. Cl.: A21C 1/00, G08C 17/02, H04B 5/00

(54) **VORRICHTUNG MIT DRAHTLOSMODUL ZUM BEARBEITEN EINES MEDIUMS**
DEVICE WITH WIRELESS MODULE FOR PROCESSING A MEDIUM
DISPOSITIF COMPRENANT UN MODULE SANS FIL POUR LE TRAITEMENT D'UN MILIEU

(30) Priorität: 02.07.2015 DE 102015008412
(43) Veröffentlichungstag der Anmeldung: 06.06.2018
(73) Patentinhaber: IKA - Werke GmbH & Co. KG, 79219 Staufen (DE)
(72) Erfinder: KAUFMANN, Axel, 79395 Neuenburg (DE)
(74) Vertreter: Börjes-Pestalozza, Henrich
(86) Internationale Anmeldenummer: PCT/EP2016/001045
(87) Internationale Veröffentlichungsnummer: WO 2017/001049

(56) Entgegenhaltungen:
- WO-A1-2014/144638
- DE-A1- 19 947 466
- DE-U1-202005 016 300

## Beschreibung

Die Erfindung betrifft eine Vorrichtung mit einer Basisstation und zumindest einer, von der Basisstation abnehmbaren Bearbeitungseinheit mit einem Werkzeug zum Bearbeiten eines Mediums, wobei die Bearbeitungseinheit einen Behälter zur Aufnahme des Mediums, eine Verschlusseinheit zum Verschließen des Behälters und eine Sensorvorrichtung zum Messen von zumindest einem Parameter des Mediums aufweist.

Vorrichtungen der eingangs genannten Art sind bereits in einer Vielzahl an Ausführungen bekannt - zum Beispiel aus den Druckschriften DE 20 2005 016 300 D1, WO 2014/144638 A1 und DE 199 47 466 A1. Bei derartigen vorbekannten Vorrichtungen kann es wünschenswert sein, dass insbesondere während der Inbetriebnahme des Werkzeuges der Bearbeitungseinheit, welches beispielsweise zum Zerkleinern, Mahlen oder Mischen eines Mediums dient, eine Messung eines bestimmten Parameters des Mediums durchzuführen. Dazu wird in der Regel eine Sensorvorrichtung, wie beispielsweise ein Messfühler eines Thermometers, in einen Innenraum des Behälters der Bearbeitungseinheit hineingehalten. Während des Betriebes einer solchen Vorrichtung besteht daher die Gefahr, dass eine, insbesondere in den Behälter gehaltene oder gehängte Sensorvorrichtung durch das sich bewegende oder rotierende Werkzeug und/oder auch das Werkzeug selbst durch ein Kollidieren des Werkzeuges mit der Sensorvorrichtung beschädigt wird/werden.

Ferner besteht ein wesentliches Problem darin, dass vorbekannte Vorrichtungen der eingangs erwähnten Art im Allgemeinen nicht dazu geeignet sind, um eine Messung eines bestimmten Parameters in Echtzeit durchzuführen, um so bei einer Veränderung des gemessenen Parameters umgehend reagieren zu können, beispielsweise derart, dass der Antrieb des Werkzeugs angehalten wird. Dies kann besonders dann von großer Bedeutung sein, wenn es sich um ein empfindliches zu bearbeitendes Medium handelt, bei welchem bestimmte Grenzwerte des zu messenden Parameters nicht überschritten oder unterschritten werden dürfen, da das Medium ansonsten möglicherweise einen Schaden davontragen kann.

Üblicherweise bestehen vorbekannte Vorrichtungen der eingangs beschriebenen Art aus einer Basisstation und lediglich einer einzigen Bearbeitungseinheit, wobei die abnehmbare Bearbeitungseinheit nur ein ganz bestimmtes und in der Regel nicht wechselbares Werkzeug zum Bearbeiten eines Mediums aufweist. Die Bearbeitungseinheit ist mitunter nur deshalb abnehmbar ausgebildet, um eine einfachere Handhabung, beispielsweise eine einfachere Umfüllung, des im Behälter bearbeiteten Mediums zu ermöglichen. Eine Kombination beziehungsweise ein Betrieb der Basisstation mit mehreren wechselbaren Bearbeitungseinheiten ist zumeist nicht vorgesehen. Daher ist der Benutzer einer solchen Vorrichtung nur auf eine Bearbeitungseinheit mit einem Werkzeug festgelegt. Zudem kann es vorkommen, dass ein Benutzer eine Bearbeitungseinheit zu lange im Einsatz hat und eine maximale Betriebszeit überschreitet. Beispielsweise wenn das Werkzeug durch einen zu langen Einsatz abgenutzt, insbesondere stumpf, ist.

Es sind allerdings auch Vorrichtungen bekannt, die auswechselbare Bearbeitungseinheiten, insbesondere mit verschiedenen Werkzeugen, aufweisen und zusammen mit einer Basisstation betreibbar sind. Ein wesentlicher Nachteil bei derartigen vorbekannten Geräten kann jedoch darin bestehen, dass die Basisstation nicht erkennen kann, ob eine und/oder welcher Typ von Bearbeitungseinheit auf die Basisstation aufgesetzt wurde, um durch diese angetrieben zu werden. Da Bearbeitungsprogramme zum Bearbeiten des Mediums in der Regel manuell eingestellt werden müssen und/oder übliche Basisstationen vorbekannter Vorrichtungen keine, für die jeweilige Bearbeitungseinheit spezifische Leistungsbegrenzung aufweisen, kann dies zur Folge haben, dass ein unsachgemäßer Gebrauch der Bearbeitungseinheit, insbesondere des Werkzeugs, erfolgt, beispielsweise durch eine Verwendung einer zu hohen Drehzahl und/oder eine Ingebrauchnahme für eine zu lange Betriebszeit. Dadurch kann es vorkommen, dass die Bearbeitungseinheit, insbesondere das Werkzeug der Bearbeitungseinheit, und/oder das zu bearbeitende Medium beschädigt wird/werden. Bisherige Lösungsversuche zum Beheben dieses Problems sind mitunter technisch aufwendig und teuer.

Die dieser Erfindung zugrundeliegende Aufgabe besteht also darin, eine Vorrichtung der eingangs erwähnten Art bereitzustellen, welche die vorgenannten Nachteile ausräumt.

Die Lösung dieser Aufgabe wird durch die Merkmale des Anspruchs 1 gelöst. Insbesondere wird erfindungsgemäß zur Lösung dieser Aufgabe vorgeschlagen, dass ein Teil der Sensorvorrichtung oder die Sensorvorrichtung derart im und/oder am Behälter ortsfest angeordnet ist, dass eine, insbesondere sichere, Messung eines Parameters während der gleichzeitigen Bearbeitung des Mediums durchführbar ist, und dass die Vorrichtung ein Drahtlosmodul zum Herstellen einer Drahtlosverbindung und zumindest zum Übertragen von Daten zwischen der Basisstation und der Bearbeitungseinheit aufweist. Insbesondere kann vorgesehen sein, dass die Drahtlosverbindung zumindest zum Übertragen eines gemessenen Parameters vorgesehen ist. Die Möglichkeit der Durchführung einer sicheren Messung während der gleichzeitigen Bearbeitung des Mediums mittels des Werkzeuges bezieht sich darauf, dass während das Werkzeug in Bewegung oder Rotation ist, es gleichzeitig möglich ist, eine Messung eines Parameters des Mediums durchzuführen, wobei jedoch gewährleistet ist, dass keine Gefahr besteht, dass es zu einer Kollision der Sensorvorrichtung und dem Werkzeug kommt, da diese räumlich voneinander ausreichend weit entfernt angeordnet sind. Dabei ist ausgeschlossen, dass sich das Werkzeug und die Sensorvorrichtung kontaktieren können. Ferner kann es vorgesehen sein, dass zumindest ein Teil der Sensorvorrichtung, insbesondere ein Sensorelement, zusammen mit einer Innenseite der Behälterwandung, insbesondere flächenbündig, abschließt, vorzugsweise so dass sie nicht in einen Innenraum des Behälters vorsteht. Dies wird dadurch ermöglicht, dass die Sensorvorrichtung derart am und/oder im Behälter der erfindungsgemäßen Vorrichtung angeordnet ist, dass sie zumindest teilweise, insbesondere mit einem Sensorelement, vorzugsweise einem als Sensorstift ausgebildeten Sensorelement, in die Wandung des Behälters integriert und/oder im Innenraum des Behälters angeordnet ist. Die mittels des Drahtlosmoduls herstellbare Drahtlosverbindung ermöglicht es, dass Daten zwischen der Basisstation und der Bearbeitungseinheit drahtlos per Funk übertragbar sind. Dabei kann gänzlich auf elektrische Leitungs- und/oder elektrische Kontaktverbindungen zwischen der Bearbeitungseinheit und der Basisstation verzichtet werden.

Des Weiteren kann es vorgesehen sein, dass die Sensorvorrichtung ein Sensorelement oder mehrere Sensorelemente aufweist. Das zumindest eine Sensorelement kann insbesondere als Sensorstift ausgebildet sein. Ferner kann im Falle von mehreren Sensorelementen vorgesehen sein, dass es sich um verschiedene Sensorelemente handelt, die zum Messen von unterschiedlichen Parametern geeignet sind, wie beispielsweise einer Temperatur, eines Druckes, eines pH-Wertes und/oder eines Feuchtigkeitsgehaltes.

Als eine besonders vorteilhafte Ausgestaltung der Erfindung kann vorgesehen sein, dass das Drahtlosmodul der erfindungsgemäßen Vorrichtung aus einer Transpondereinheit und einer Empfangseinheit besteht, wobei zwischen der Transpondereinheit und der Empfangseinheit eine elektronische Kopplung zumindest zum Übertragen von Daten einrichtbar ist. Vorzugsweise kann die elektrische Kopplung zum Senden von Daten von der Empfangseinheit zur Transpondereinheit und/oder zum Empfangen von der Transpondereinheit gesendeter Daten durch die Empfangseinheit oder jeweils umgekehrt einrichtbar sein. Alternativ oder ergänzend zu den zuvor genannten Merkmalen der erfindungsgemäßen Vorrichtung kann vorgesehen sein, dass die elektrische Kopplung zur Energieversorgung der Transpondereinheit, insbesondere mittels Funkwellen der Empfangseinheit, einrichtbar ist.

Insbesondere kann vorgesehen sein, dass die Datenübertragung im Radiofrequenzbereich erfolgt. Weiterhin denkbar ist eine Datenübertragung per Bluetooth, WLAN, ZigBee, NFC, Wibree oder WiMAX im Radiofrequenzbereich sowie IrDA und optischer Richtfunk (FSO) im infraroten und/oder optischen Frequenzbereich. Der Begriff "Transpondereinheit" bezieht sich auf eine Funk-Kommunikationsgeräteeinheit, welche eingehende Signale aufnimmt und insbesondere automatisch beantwortet und/oder weiterleitet. Darunter können sowohl passive, wie auch aktive Transpondereinheiten fallen. Passiv steht dabei für Systeme, die zur Kommunikation und zur Abarbeitung interner Prozesse benötigte Energie ausschließlich aus dem Feld einer Empfangseinheit, insbesondere einer Schreib-/Leseeinheit, beziehen. Passive Transponder benötigen keine eigene Stromversorgung. Aktiv steht dabei für Systeme mit eigener Energieversorgung. Sie können beispielsweise eine Batterie oder einen Akku aufweisen und/oder sind an ein externes Stromnetz angeschlossen. Neben den Reinformen passiver beziehungsweise aktiver Systeme existieren auch semiaktive Transponder. Der Begriff "Transpondereinheit" kann sich auf. alle hierin beschriebenen Funk-Systeme beziehen, wobei diese Aufzählung nicht erschöpfend ist.

Es kann zudem vorgesehen sein, dass die Transpondereinheit der erfindungsgemäßen Vorrichtung einen Datenspeicher und/oder eine Antenne zum Senden und/oder Empfangen von Daten aufweist. Der Datenspeicher kann dazu dienen, um beispielsweise gemessene Parameter zu speichern und/oder um eine spezifische Codierung als Erkennungssignal, insbesondere für eine Bearbeitungseinheit, zu hinterlegen. Darüber hinaus kann, vorzugsweise automatisiert, darauf die Zeit gespeichert werden, für wie lange die Bearbeitungseinheit bereits in Betrieb war. Vorzugsweise ist die Transpondereinheit zumindest teilweise in Chipform, Münzenform, Diskform, Kugelform, Quaderform, kugelig und/oder rechteckig ausgebildet. Es kann weiter vorgesehen sein, dass die Transpondereinheit im breitesten Durchmesser maximal 10,0 cm, insbesondere maximal 5,0 cm, insbesondere maximal 2,5 cm, insbesondere weniger als 2,5 cm beträgt. Es kann außerdem vorgesehen sein, dass die Transpondereinheit im breitesten Durchmesser weniger als 10,0 mm, insbesondere weniger als 5,0 mm beträgt. Es kann zudem vorteilhaft sein, wenn die Transpondereinheit im schmalsten Durchmesser weniger als 5,0 mm, insbesondere weniger als 2,5 mm, insbesondere weniger als 1,0 mm aufweist. Es kann auch vorgesehen sein, dass die Transpondereinheit ein Transpondergehäuse aufweist, wobei das Transpondergehäuse beispielsweise aus Kunststoff und/oder Glas bestehen kann.

Als eine weitere zweckmäßige Ausgestaltung der erfindungsgemäßen Vorrichtung kann vorgesehen sein, dass die Bearbeitungseinheit eine Transpondereinheit und die Basisstation eine Empfangseinheit aufweist. Ebenso ist es alternativ oder ergänzend denkbar, dass die Basisstation eine Transpondereinheit und die Bearbeitungseinheit eine Empfangseinheit aufweist. Damit ist es möglich, dass Daten, insbesondere gemessene Parameter, zwischen der Bearbeitungseinheit und der Basisstation übermittelbar sind. Die Basisstation kann ferner dazu eingerichtet sein, die erhaltenen Daten auszuwerten und insbesondere automatisiert in Reaktion auf die ausgewerteten Daten ein bestimmtes Bearbeitungsprogramm zu starten.

Es kann vorgesehen sein, dass eine oder die bereits genannte Transpondereinheit an einer Außenseite der Behälterwandung angeordnet ist. Insbesondere kann es zweckmäßig sein, wenn die Transpondereinheit an einer in Gebrauchsstellung der Bearbeitungseinheit der Basisstation zugewandten und/oder an einer oder der Außenseite eines Behälterbodens des Behälters angeordnet ist. Alternativ oder ergänzend zu den zuvor genannten Merkmalen kann bei der erfindungsgemäßen Vorrichtung vorgesehen sein, dass eine oder die bereits genannte Empfangseinheit an einem Sockel der Basisstation zum Aufsetzen und/oder Einrasten der Bearbeitungseinheit auf die Basisstation, insbesondere in einem Durchbruch an der Oberseite des Sockels, angeordnet ist. Ferner kann vorgesehen sein, dass der Durchbruch mit einer Abdeckung, insbesondere eine Kunststoffabdeckung, nach außen hin verschlossen ist. Durch eine oder mehrere der zuvor genannte Arten der Anordnung der Transpondereinheit und/oder der Empfangseinheit kann es ermöglicht werden, dass ein Abstand zwischen der Transpondereinheit und der Empfangseinheit relativ gering, insbesondere weniger als 15,0 cm, insbesondere weniger als 10,0 cm, insbesondere weniger als 7,5 cm, insbesondere weniger als 5,0 cm, insbesondere weniger als 2,5 cm, beträgt. Insbesondere bei passiven Transpondereinheiten kann ein geringer Abstand von Vorteil sein, da die Reichweite der Transpondereinheit zum Aufbauen einer Drahtlosverbindung dabei geringer sein kann.

Es kann ferner vorteilhaft sein, wenn die Sensorvorrichtung der erfindungsgemäßen Vorrichtung zumindest mit einem Teil des Drahtlosmoduls, insbesondere mit einer oder der zuvor genannten Transpondereinheit, verbunden ist. Insbesondere kann vorgesehen sein, dass diese elektrisch miteinander verbunden sind. Alternativ oder ergänzend zu den zuvor genannten Merkmalen kann vorgesehen sein, dass die Sensorvorrichtung der erfindungsgemäßen Vorrichtung zumindest mit einem Teil des Drahtlosmoduls, insbesondere mit einer oder der zuvor genannten Transpondereinheit zusammen als eine Transponder-Sensor-Einheit einstückig ausgebildet ist. Zudem kann alternativ oder ergänzend zu den zuvor genannten Merkmalen vorgesehen sein, dass zumindest ein Teil der Sensorvorrichtung, insbesondere ein Sensorelement, vorzugsweise ein als Sensorstift ausgebildetes Sensorelement, mit dem Medium im Innenraum des Behälters in Kontakt kommt. Vorzugsweise derart, dass zumindest ein Teil der Sensorvorrichtung, insbesondere ein Sensorelement, vorzugsweise ein als Sensorstift ausgebildetes Sensorelement, eine Aussparung in einer Behälterwandung des Behälters, insbesondere in einem Behälterboden, durchsetzt und so an oder in einen Innenraum des Behälters, insbesondere in und/oder an einen Behälterboden, reicht und/oder an diesen angrenzt. Es kann insbesondere vorgesehen sein, dass zumindest ein Teil des Sensorelements, insbesondere der mit dem Medium in Kontakt stehende Teil, flächenbündig mit einer Innenwand, insbesondere mit dem Behälterboden, des Behälters abschließt.

Um die Elektronik des Drahtlosmoduls, insbesondere der Transpondereinheit, welche möglicherweise druck- und/oder hitzeempfindlich sein kann, besser zu schützen, kann bei der erfindungsgemäßen Vorrichtung weiter vorgesehen sein, dass zumindest ein Teil des Drahtlosmoduls, insbesondere eine oder die Transpondereinheit, vorzugsweise thermisch, isoliert von zumindest einem Teil der Sensorvorrichtung ist, insbesondere thermisch isoliert von einem oder dem Sensorelement ist. Dies kann insbesondere dann vorteilhaft sein, wenn die Sensorvorrichtung zur Temperaturbestimmung, insbesondere zur Bestimmung von hohen Temperaturen ausgelegt ist, welche die Transpondereinheit beschädigen können.

Des Weiteren kann es alternativ oder ergänzend zu den vorgenannten Merkmalen zweckmäßig sein, wenn zumindest ein Teil des Drahtlosmoduls, insbesondere eine oder die Transpondereinheit, gegenüber der Behälterwandung, vorzugsweise thermisch, isoliert ist. Vorzugsweise kann die Transpondereinheit dadurch, vorzugsweise thermisch, isoliert sein, indem sie von einer Kunststoffschicht umschlossen ist.

Um eine ideale Reinigung und/oder Desinfektion der Bearbeitungseinheit der erfindungsgemäßen Vorrichtung zu ermöglichen, kann es vorgesehen sein, dass die Bearbeitungseinheit autoklavierbar und/oder spülmaschinenfest ausgestaltet ist. Ferner kann es zweckmäßig sein, wenn zumindest ein Teil der Sensorvorrichtung, insbesondere der mit dem Medium in Kontakt stehende Teil, vorzugsweise zumindest ein Teil eines oder des Sensorelements, beschichtet, ist, um eine Beschädigung der Sensorvorrichtung, insbesondere des Sensorelements, beispielsweise durch chemische Reinigungsmittel, zu verhindern.

Erfindungsgemäß ist bei der Vorrichtung vorgesehen, dass die Vorrichtung mehrere, funktionell unterschiedliche, vorzugsweise unterschiedliche Werkzeuge aufweisende, Bearbeitungseinheiten aufweist. Es kann beispielsweise vorgesehen sein, dass eine oder mehrere Bearbeitungseinheiten der erfindungsgemäßen Vorrichtung als Mixer (gleichbedeutend mit dem englischen Begriff Blender), Mühle, Mischeinheit, insbesondere Rühreinheit, oder Kneteinheit ausgebildet ist/sind. Vorzugsweise kann vorgesehen sein, dass eine oder mehrere Bearbeitungseinheiten der erfindungsgemäßen Vorrichtung als Mixer und/oder eine oder mehrere Bearbeitungseinheiten als Mühle ausgebildet ist/sind. Darüber hinaus kann es alternativ oder ergänzend zweckmäßig sein, wenn die Basisstation einen Antrieb, insbesondere zum Antreiben des Werkzeuges der zumindest einen Bearbeitungseinheit, aufweist.

Beispielsweise um eine Erkennung der oder einer bestimmten Bearbeitungseinheit durch die Basisstation zu ermöglichen, ist ferner vorgesehen, dass jeder zur Vorrichtung gehörenden Bearbeitungseinheit anhand einer, insbesondere spezifischen, auf einer oder der bereits zuvor genannten Transpondereinheit gespeicherten Codierung ein spezifisches Erkennungssignal zur Erkennung der jeweiligen Bearbeitungseinheit durch die Basisstation zugeordnet ist. Idealerweise kann eine spezifische Codierung auf einem Datenträger der Transpondereinheit gespeichert werden.

Es kann insbesondere vorteilhaft sein, wenn die erfindungsgemäße Vorrichtung eine Speichervorrichtung aufweist. Vorzugsweise weist die Basisstation der erfindungsgemäßen Vorrichtung eine Speichervorrichtung auf, wobei die Basisstation erfindungsgemäß einen Programmspeicher mit mehreren, insbesondere jeweils mehreren und/oder unterschiedlichen Bearbeitungseinheiten zugewiesenen, Bearbeitungsprogrammen aufweist. Ferner ist die Basisstation erfindungsgemäß dazu eingerichtet, dass mittels des Erkennungssignals zur Identifikation ein bestimmtes, insbesondere für die oder eine bestimmte Bearbeitungseinheit, zugelassenes Bearbeitungsprogramm, aus dem Programmspeicher für eine oder die Bearbeitungseinheit, vorzugsweise automatisch, einstellbar ist. Insbesondere kann vorgesehen sein, dass durch ein bestimmtes Bearbeitungsprogramm eine bestimmte Bearbeitungszeit und/oder eine bestimmte Bearbeitungsintensität, insbesondere zur Bearbeitung des Mediums, einstellbar oder vorgebbar ist. Erfindungsgemäß ist vorgesehen, dass mittels der Transpondereinheit eine maximale Betriebszeit der Bearbeitungseinheit erfassbar und/oder speicherbar ist. Damit ist für die oder jede Bearbeitungseinheit eine maximale Betriebszeit definierbar, wobei ein Erreichen dieser maximalen Betriebszeit durch die Basisstation, insbesondere automatisch, erkennbar ist. Beispielsweise kann dies auf einer Anzeigeeinheit dem Benutzer der erfindungsgemäßen Vorrichtung angezeigt werden, so dass der Benutzer darauf hingewiesen wird, dass er die Bearbeitungseinheit erneuern und/oder wieder instand setzen muss. Damit kann beispielsweise verhindert werden, dass eine Bearbeitung eines Mediums mit einer Bearbeitungseinheit erfolgt, die bereits ihre maximale Betriebszeit erreicht hat, wodurch die erfindungsgemäße Vorrichtung und/oder das Medium beschädigt werden könnten.

Bei einer besonders vorteilhafte Ausgestaltung der erfindungsgemäßen Vorrichtung kann vorsehen sein, dass eine oder die Transpondereinheit als RFID-Transponder, insbesondere mit einem Datenspeicher und einer Antenne zum Senden und/oder Empfangen von Daten, eingerichtet ist. In diesem Fall ist es ebenso zweckmäßig, wenn eine oder die Empfangseinheit als RFID-Empfangseinheit, insbesondere als ein RFID-Lesegerät oder als ein RFID-Lese-/Schreibgerät, eingerichtet ist. Der Vorteil der RFID Technologie liegt insbesondere darin, dass die Komponenten in Form von RFID-Transpondereinheit und RFID-Empfängereinheit relativ klein sind und daher einfach in größere Komponenten, wie beispielsweise die Bearbeitungseinheit und/oder die Basisstation integrierbar sind. Darüber hinaus ist ihre Herstellung kostengünstig. Insbesondere kann vorgesehen sein, dass die RFID-Transpondereinheit und/oder die RFID-Transpondereinheit und RFID-Empfängereinheit relativ klein sind und daher einfach in größere Komponenten, wie beispielsweise die Bearbeitungseinheit und/oder die Basisstation integrierbar sind. Darüber hinaus ist ihre Herstellung kostengünstig. Insbesondere kann vorgesehen sein, dass die RFID-Transpondereinheit und/oder die RFID-Empfangseinheit in Chipform ausgebildet ist/sind. Die Abkürzung "RFID" steht für den englischen Begriff "Radio Frequency Identification".

Es kann vorteilhaft sein, wenn die Sensorvorrichtung einen oder mehrere Sensoren ausgewählt aus der Gruppe bestehend aus Temperatursensor (Thermometer), pH-Sensor, Feuchtigkeitssensor und/oder Drucksensor aufweist. Insbesondere kann vorgesehen sein, dass die Sensorvorrichtung als Temperatursensor mit einem Sensorelement, insbesondere einem Sensorstift, ausgebildet ist.

Nachstehend sind mehrere Ausführungsformen der Erfindung anhand der Zeichnungen näher beschrieben, durch welche sich allein oder in Kombination mit den Ansprüchen und der Beschreibung weitere Ausführungsformen der Erfindung ergeben können. Es zeigt in schematischer Darstellung:
Fig. 1 ein Ausführungsbeispiel einer erfindungsgemäßen Vorrichtung mit einer als Blendereinheit ausgeformten Bearbeitungseinheit in perspektivischer Ansicht,
Fig. 2 eine Basisstation der erfindungsgemäßen Vorrichtung gemäß Fig. 1 in perspektivischer Ansicht,
Fig. 3 ein Ausführungsbeispiel einer erfindungsgemäßen Vorrichtung mit einer als Blendereinheit ausgeformten Bearbeitungseinheit gemäß Fig. 1 in Draufsicht,
Fig. 4 einen Ausschnitt einer in Seitenansicht und zum Teil als Schnittansicht dargestellten erfindungsgemäßen Vorrichtung gemäß den Fig. 1 bis 3,
Fig. 5 einen Ausschnitt eines unteren Teilbereichs einer in Seitenansicht und zum Teil als Schnittansicht dargestellten Bearbeitungseinheit, wobei die Bearbeitungseinheit als Blendereinheit ausgeformt ist,
Fig. 6 eine Bearbeitungseinheit der erfindungsgemäßen Vorrichtung gemäß den Fig. 1 bis 5 in Draufsicht.

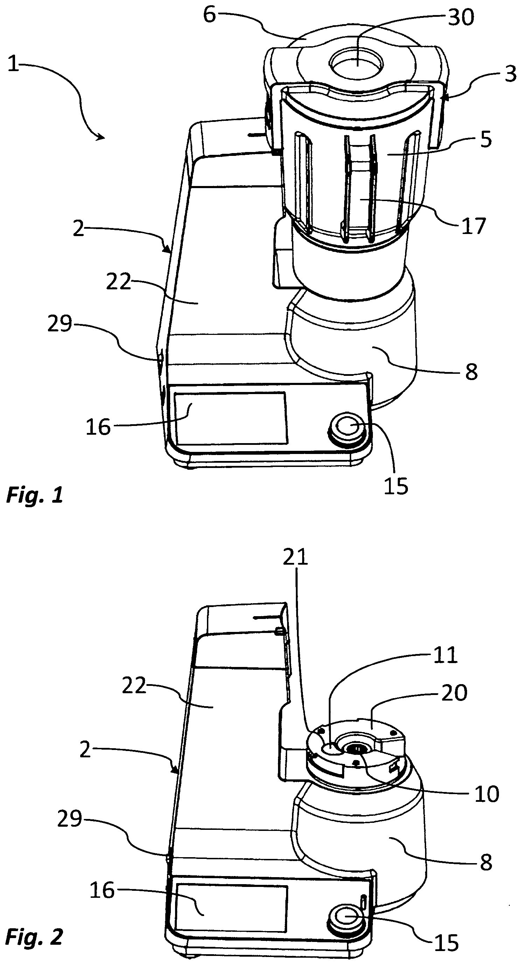

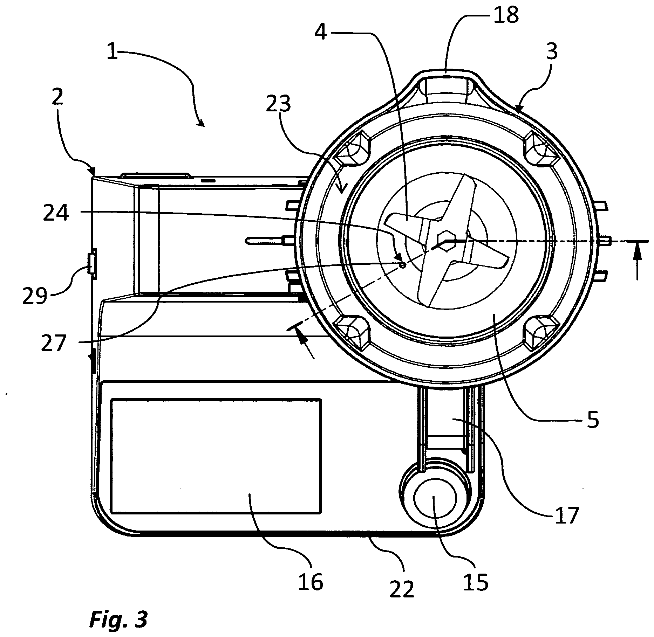

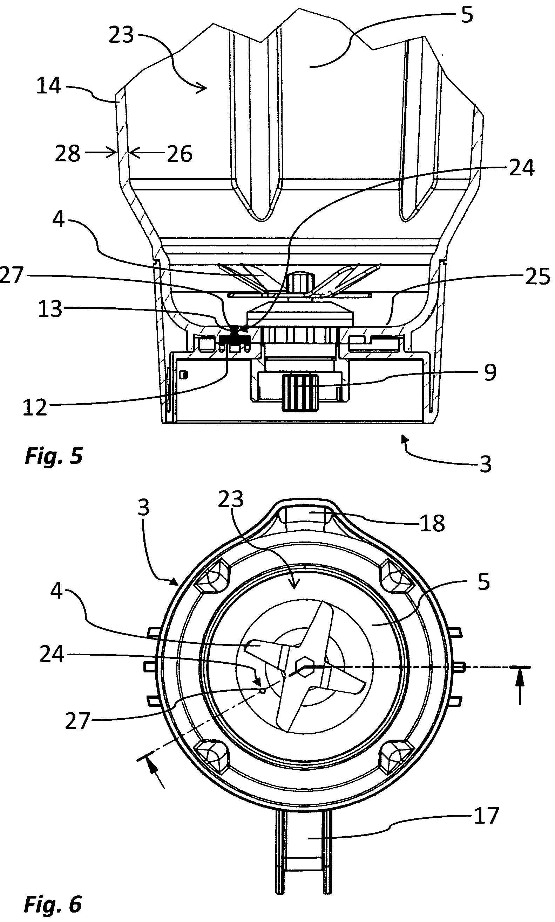

In den Figuren 1, 3 und 4 ist eine Ausgestaltung einer erfindungsgemäßen Vorrichtung dargestellt, die im Ganzen nachfolgend als 1 bezeichnet ist. Figur 2 zeigt eine Basisstation 2 der erfindungsgemäßen Vorrichtung 1 ohne eine abgenommene Bearbeitungseinheit 3. Die abgenommene Bearbeitungseinheit 3 ist zum Teil nur in Ausschnitten in den Figuren 5 und 6 gezeigt.

Die Vorrichtung 1 weist eine Basisstation 2 auf, auf welche eine abnehmbare Bearbeitungseinheit 3 aufsetzbar und in Gebrauchsstellung mittels eines Antriebs 8 der Basisstation 2 in Betrieb versetzbar ist.

Die Bearbeitungseinheit 3 weist einen Behälter 5 und eine Verschlusseinheit 6 zum Verschließen des Behälters 5 auf, wobei, wie es hier in Figur 1 dargestellt ist, vorgesehen sein kann, dass die Verschlusseinheit 6 eine Einfüllöffnung 30 zum Einfüllen eines Mediums aufweist. Im Behälterinnenraum 23 des Behälters 5 ist ein Werkzeug 4 zum Bearbeiten eines Mediums angeordnet, wobei das Werkzeug 4 in Gebrauchsstellung, das heißt wenn die Bearbeitungseinheit 3 auf die Basisstation 2 aufgesetzt vorliegt, durch den Antrieb 8 antreibbar ist, insbesondere in Rotation versetzbar ist. Bei der in den Figuren dargestellten Vorrichtung 1 ist die Bearbeitungseinheit 3 als Blendereinheit ausgestaltet, wobei das Werkzeug 4 rotierbar und mit vier sternförmig angeordneten Rotationsmessern ausgeformt ist. Es ist jedoch ebenso denkbar, die Basisstation 2 zur Inbetriebnahme anderer Ausgestaltungen einer Bearbeitungseinheit 3 einzusetzen. Insbesondere können andere, mit der Basisstation 2 kombinierbare Bearbeitungseinheiten 3 mit anderen Werkzeugen 4 ausgestattet sein. Das Werkzeug 4 kann beispielsweise als Messer, Mörser, Rührelement, Knethaken, Schneebesen, Flachrührer, Raspel, Malelement oder dergleichen ausgebildet sein.

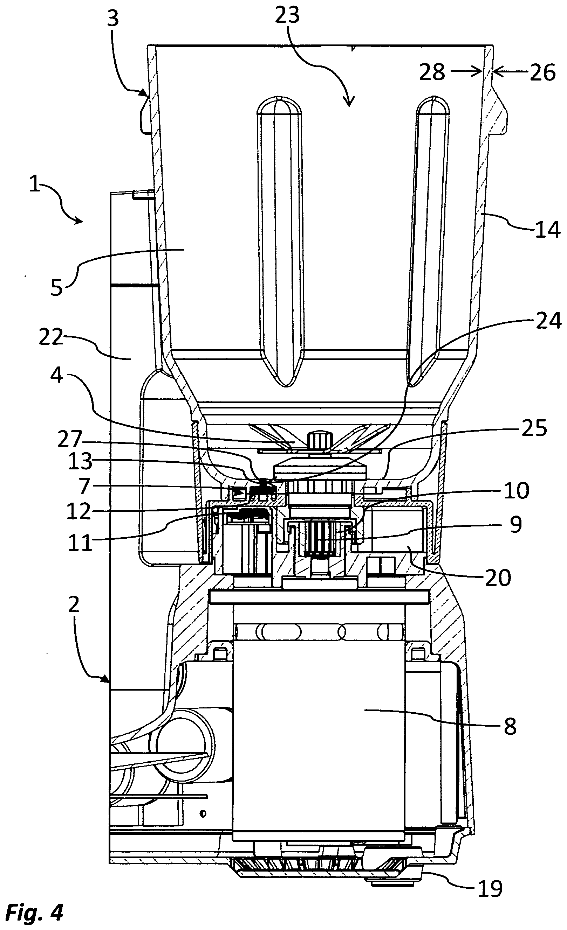

Die Vorrichtung 1 weist weiterhin eine Sensorvorrichtung 13 auf, durch welche zumindest ein Parameter eines Mediums im Behälter 5 in Echtzeit und während des Betriebs der Vorrichtung, das heißt während sich das Werkzeug 4 bewegt, messbar ist. Wie besonders in Figur 4 zu erkennen ist, ist die Sensorvorrichtung 13 ortsfest im Behälter integriert, dass eine sichere Messung eines Parameters während der gleichzeitigen Bearbeitung des Mediums durchführbar ist, indem das Werkzeug und die Sensorvorrichtung derart angeordnet sind, dass damit ausgeschlossen ist, dass sich das Werkzeug und die Sensorvorrichtung kontaktieren können, so dass keine Gefahr besteht, dass es zu einer Kollision der Sensorvorrichtung und dem Werkzeug kommt.

Die Sensorvorrichtung 13 kann als Temperatursensor, pH-Sensor, Feuchtigkeitssensor und/oder Drucksensor, insbesondere mit zumindest einem Sensorelement 27, ausgeformt sein. Die hier dargestellte Sensorvorrichtung 13 ist als Temperatursensor mit einem Sensorelement 27 ausgeformt, welches vorzugsweise bis in den Innenraum 23 des Behälters 5 reicht. Insbesondere weist die Sensorvorrichtung 13 ein als Sensorstift ausgeformtes Sensorelement 27 auf, das mit einem Medium im Behälterinnenraum 23 in Kontakt tritt. Dabei kann es vorteilhaft sein, wenn das Sensorelement 27 eine geringe Masse und/oder eine niedrige spezifische Wärmekapazität aufweist, derart, dass eine Temperaturänderung des Mediums nahezu in Echtzeit, das heißt unmittelbar bei Eintritt der Temperaturänderung, messbar ist. Das Sensorelement 27 kann in einer Aussparung 24 der Behälterwandung 14, insbesondere im Behälterboden 25, des Behälters 5 angeordnet sein und/oder diese durchsetzen. Insbesondere kann es zweckmäßig sein, wenn der in den Innenraum 23 des Behälters 5 reichende Teil des Sensorelements 27 flächenbündig mit der Innenseite 28 der Behälterwandung 14 abschließt. Um einen Schaden des Sensorelements 27, insbesondere des Teils, welcher in den Behälterinnenraum 23 reicht und/oder in Kontakt mit dem Medium tritt, vor äußeren Einflüssen zu schützen, wie beispielsweise vor chemischen Reinigungsmittel, Druck und/oder Hitze, kann es vorgesehen sein, dass das Sensorelement 23, insbesondere zumindest der Teil welcher in den Behälterinnenraum 23 reicht und/oder in Kontakt mit dem Medium tritt, vorzugsweise der Messstift, beschichtet und/oder versiegelt ist.

Zur Herstellung einer Drahtlosverbindung zum Empfangen und/oder Übertragen von Daten zwischen der Basisstation 2 und der Bearbeitungseinheit 3 ist ein Drahtlosmodul 7 vorgesehen. Mittels des Drahtlosmoduls 7 kann es daher möglich sein, Daten von der Basisstation 2 an die Bearbeitungsstation 3 und/oder von der Bearbeitungsstation 3 an die Basisstation 2 zu übermitteln, insbesondere automatisiert zu übermitteln.

Wie in den Figur 4 und teilweise in Figur 5 (in Bezug auf die Bearbeitungseinheit 3) zu sehen ist, weist das Drahtlosmodul 7 eine Transpondereinheit 12 und eine Empfangseinheit 11 auf.

Die Transpondereinheit 12 ist hierbei in die Bearbeitungseinheit 3 integriert, wobei sie an der Außenseite 26 der Behälterwandung 14 am Behälterboden 25 angeordnet ist. Über ein Gehäuse kann die Transpondereinheit 12 nach außen hin abgedeckt und geschützt sein.

Die Empfangseinheit 11 ist an der Basisstation 2 angeordnet oder in die Basisstation 2 integriert, insbesondere wobei sie in einem Durchbruch 21 eines Sockels 20, vorzugsweise an der Oberseite eines Sockels 20, der Basisstation 2 zum Aufsetzen und/oder Einrasten der Bearbeitungseinheit 3 auf die Basisstation 2 angeordnet ist. Die Bearbeitungseinheit 3 weist ein Kupplungselement 9 auf, welches in ein passendes Gegenkupplungselement 10 des Sockels 20 einsetzbar ist. Das Gegenkupplungselement 10 ist zur Aufnahme des Kupplungselements 9 ausgebildet und beispielsweise über eine Antriebswelle mit dem Antrieb 8 verbunden. In Gebrauchsstellung der Bearbeitungseinheit 3 kann das Werkzeug 4 somit mittels einer Kraftübertragung vom Gegenkupplungselement 10 auf das Kupplungselement 9 durch Inbetriebnahme des Antriebs 8 angetrieben werden. Beispielsweise kann es vorgesehen sein, dass der Sockel 20 aus einem Metall hergestellt ist. Vorzugsweise weist der Sockel 20 eine Aussparung auf, worin das Gegenkupplungselement 10 angeordnet ist.

Zwischen der Transpondereinheit 12 und der Empfangseinheit 11 kann eine elektronische Kopplung zumindest zur Herstellung einer Drahtlosverbindung zum Übertragen von Daten, insbesondere zum Senden und/oder Empfangen von Daten von der Empfangseinheit 11 zur Transpondereinheit 12 oder umgekehrt einrichtbar sein. Es kann darüber hinaus vorgesehen sein, dass die Energieversorgung der Transpondereinheit 12 mittels der Funkwellen der Empfangseinheit einrichtbar ist.

Bei der in den Figuren dargestellten Ausgestaltung der erfindungsgemäßen Vorrichtung 1 ist die Transpondereinheit 12 als, insbesondere chipförmiger, RFID-Transponder (RFID = engl. "Radio Frequency Identification"; auch als RFID-Transponder-Chip bezeichnet) mit einem Datenspeicher und einer Antenne zum Senden und/oder Empfangen von Daten ausgestaltet. Die Empfangseinheit 11 ist als RFID-Empfangseinheit, insbesondere als ein RFID-Lesegerät oder als ein RFID-Lese-/Schreibgerät, eingerichtet. Der RFID-Transponder kann als passive Transpondereinheit 12 eingerichtet sein und muss daher keine eigene Energieversorgung aufweisen. Der RFID-Transponder kann ebenso als aktive Transpondereinheit 12 eingerichtet sein und eine eigene Energieversorgung aufweisen. Aufgrund der geringen Maße der Transpondereinheit 12, insbesondere wenn diese passiv ausgestaltet ist, und der Empfangseinheit 11 sind diese Komponenten platzsparend an oder in die Bearbeitungseinheit 12 und/oder an oder in der Empfangseinheit 11 anordenbar, insbesondere integrierbar. Ferner kann mittels der Empfangseinheit 11 und der Transpondereinheit 11 eine Drahtlosverbindung herstellbar sein, ohne dass diese beiden Komponenten in direktem Kontakt miteinander stehen müssen.

Die Transpondereinheit 12 ist mit der Sensorvorrichtung 13 verbunden oder zusammen einstückig ausgebildet, so dass durch die Sensorvorrichtung 13 gemessene Parameter des Mediums direkt an die Transpondereinheit übermittelbar sind. Es kann vorgesehen sein, dass die Transpondereinheit 12 zum Schutz ihrer Elektronik, insbesondere vor Wärmeeinflüssen, gegenüber der Sensorvorrichtung 13, insbesondere gegenüber des Sensorelements 27, vorzugsweise thermisch, isoliert ist. Dies kann beispielsweise durch Eingießen der Transpondereinheit 12 in einen Kunststoff ermöglicht werden. Alternativ oder ergänzend kann die Transpondereinheit 12 auch gegenüber der Behälterwandung 14, vorzugsweise thermisch, isoliert sein. Darüber hinaus kann es zweckmäßig sein, wenn die Komponenten der Bearbeitungseinheit 3 derart ausgewählt und/oder angeordnet sind, dass sie für eine Behandlung im Autoklav geeignet sind.

Die Transpondereinheit 12 kann derart eingerichtet sein, dass darauf, insbesondere auf dem Datenträger, eine spezifische Codierung speicherbar ist, wobei die Codierung durch die Basisstation 2 als ein Erkennungssignal zur Erkennung einer bestimmten Bearbeitungseinheit 3 auswertbar ist. Darüber hinaus kann auf dem Datenträger die jeweilige Betriebszeit der Bearbeitungseinheit 3 gespeichert und jederzeit, insbesondere automatisiert, aktualisiert und/oder protokolliert werden.

Mit der Basisstation 2 der erfindungsgemäßen Vorrichtung 1 können mehrere, insbesondere unterschiedliche Werkzeuge 4 aufweisende, Bearbeitungseinheiten 3 betrieben werden (nicht in den Figuren dargestellt).

Die Basisstation 2 kann dazu einen Programmspeicher mit mehreren Bearbeitungsprogrammen aufweisen, wobei die Bearbeitungsprogramme jeweils mehreren und/oder unterschiedlichen Bearbeitungseinheiten 3 zugewiesenen sein können. Es kann ferner vorgesehen sein, dass die Basisstation 2 dazu eingerichtet ist, dass mittels eines oder des spezifisches Erkennungssignals ein bestimmtes, insbesondere für die Bearbeitungseinheit 3 zugelassenes Bearbeitungsprogramm, aus einem oder dem Programmspeicher, vorzugsweise automatisch, einstellbar ist. Dabei kann/können beispielsweise eine Bearbeitungszeit, insbesondere eine maximale Betriebszeit, für welche die Bearbeitungseinheit 3 ausgelegt ist, und/oder eine bestimmte Bearbeitungsintensität einstellbar oder vorgebbar sein.

Um die Bearbeitungseinheit 3 einfach und sicher von der Basisstation 2 abnehmen und/oder tragen zu können, kann vorgesehen sein, dass die Bearbeitungseinheit 3 ein Halteelement 17, welches vorzugsweise als Handgriff ausgebildet ist, aufweist.

Beispielsweise zur manuellen Einstellung eines Bearbeitungsprogramms und/oder zur Programmierung der Basisstation 2 kann diese zumindest ein Bedienelement 15 zum Bedienen der Basisstation 2 aufweisen. Ferner kann vorgesehen sein, dass die Vorrichtung 1, insbesondere die Basisstation 2, eine Anzeigeeinrichtung 16 aufweist. Mittels der Anzeigeeinrichtung 16 kann beispielsweise das aktuell verwendete Programm und/oder ein Warnhinweis, zum Beispiel bei Erreichen einer maximalen Betriebszeit einer Bearbeitungseinheit 3, angezeigt werden. Ferner kann auch eine Ausbildung als bedienbarer Touchscreen vorgesehen sein.

Um ein durch die erfindungsgemäße Vorrichtung 1 bearbeitetes Medium einfacher aus dem Behälter 5 entfernen, insbesondere ausgießen, zu können, kann vorgesehen sein, dass der Behälter 5 eine Ausgussnase 18 aufweist, insbesondere eine Ausgussnase 18, welche an der Oberkannte des Behälters 5 und/oder an der gegenüberliegenden Seite des Halteelements 17 angeordnet ist.

Die erfindungsgemäße Vorrichtung 1 weist zudem ein Gehäuse 22 auf. Insbesondere kann vorgesehen sein, dass das Gehäuse 22 zumindest teilweise aus einem Kunststoff hergestellt ist.

Zur Stromversorgung der erfindungsgemäßen Vorrichtung 1 kann vorgesehen sein, dass diese mittels eines Netzanschlusses an ein Stromnetz anschließbar ist. Ferner kann vorgesehen sein, dass die Vorrichtung 1 einen Netzschalter 29 zum Abschalten der Stromversorgung aufweist.

Um einen stabilen Stand der erfindungsgemäßen Vorrichtung 1, insbesondere bei hohen Drehzahlen und/oder bei einer befüllungsbedingten Unwucht innerhalb des Behälters 5, zu gewährleisten, kann vorgesehen sein, dass die Vorrichtung 1 mehrere, insbesondere rutschfeste, Standfüße 19 aufweist. Vorzugsweise weist die Vorrichtung 1 gummierte Standfüße 19 auf.

### Bezugszeichenliste

- 1: Vorrichtung
- 2: Basisstation
- 3: Bearbeitungseinheit
- 4: Werkzeug
- 5: Behälter
- 6: Verschlusseinheit
- 7: Drahtlosmodul
- 8: Antrieb
- 9: Kupplungselement
- 10: Gegenkupplungselement
- 11: Empfangseinheit
- 12: Transpondereinheit
- 13: Sensoreinheit
- 14: Behälterwandung
- 15: Bedienelement
- 16: Anzeigeeinrichtung
- 17: Halteelement
- 18: Ausgussnase
- 19: Standfuß
- 20: Sockel
- 21: Durchbruch
- 22: Gehäuse
- 23: Behälterinnenraum
- 24: Aussparung in Behälterwandung
- 25: Behälterboden
- 26: Außenseite der Behälterwandung
- 27: Sensorelement
- 28: Innenseite der Behälterwandung
- 29: Netzschalter
- 30: Einfüllöffnung

## Patentansprüche

1. Vorrichtung (1) mit einer Basisstation (2) und zumindest einer, von der Basisstation (2) abnehmbaren Bearbeitungseinheit (3) mit einem Werkzeug (4) zum Bearbeiten eines Mediums, wobei die Bearbeitungseinheit (3) einen Behälter (5) zur Aufnahme des Mediums, eine Verschlusseinheit (6) zum Verschließen des Behälters (5) und eine Sensorvorrichtung (13) zum Messen von zumindest einem Parameters des Mediums aufweist, wobei zumindest ein Teil der Sensorvorrichtung (13) derart im und/oder am Behälter (5) ortsfest angeordnet ist, dass eine Messung eines Parameters während der gleichzeitigen Bearbeitung des Mediums durchführbar ist, und wobei die Vorrichtung (1) ein Drahtlosmodul (7) zum Herstellen einer Drahtlosverbindung und zumindest zum Übertragen von Daten zwischen der Basisstation (2) und der Bearbeitungseinheit (3) aufweist, wobei die Vorrichtung (1) mehrere funktionell unterschiedliche Bearbeitungseinheiten (3) aufweist, dass jeder Bearbeitungseinheit (3) anhand einer auf einer Transpondereinheit (12) gespeicherten Codierung ein spezifisches Erkennungssignal zur Erkennung der jeweiligen Bearbeitungseinheit (3) durch die Basisstation (2) zugeordnet ist, wobei die Basisstation (2) einen Programmspeicher mit mehreren Bearbeitungsprogrammen aufweist und wobei die Basisstation (2) dazu eingerichtet ist, dass mittels des spezifischen Erkennungssignals ein bestimmtes Bearbeitungsprogramm aus dem Programmspeicher einstellbar ist, **dadurch gekennzeichnet, dass** mittels der Transpondereinheit (12) eine maximale Betriebszeit einer oder jeder Bearbeitungseinheit (3) erfassbar und/oder speicherbar ist, so dass für eine oder jede Bearbeitungseinheit (3) eine maximale Betriebszeit definierbar ist, wobei ein Erreichen dieser maximalen Betriebszeit durch die Basisstation (2) erkennbar ist.

2. Vorrichtung (1) nach Anspruch 1, **dadurch gekennzeichnet, dass** das Drahtlosmodul (7) aus einer oder der Transpondereinheit (12) und einer Empfangseinheit (11) besteht, wobei zwischen der Transpondereinheit (12) und der Empfangseinheit (11) eine elektronische Kopplung zumindest zum Übertragen von Daten, insbesondere zum Senden von Daten von der Empfangseinheit (11) zur Transpondereinheit (12) und/oder zum Empfangen von der Transpondereinheit (12) gesendeter Daten durch die Empfangseinheit (11), und/oder zur Energieversorgung der Transpondereinheit (12), insbesondere mittels Funkwellen der Empfangseinheit (11), einrichtbar ist.

3. Vorrichtung (1) nach Anspruch 1 oder 2, **dadurch gekennzeichnet, dass** die Bearbeitungseinheit (3) eine oder die Transpondereinheit (12) und die Basisstation (2) eine Empfangseinheit (11) aufweist und/oder dass die Basisstation (2) eine oder die Transpondereinheit (12) und die Bearbeitungseinheit (3) eine Empfangseinheit (11) aufweist.

4. Vorrichtung (1) nach einem der Ansprüche 1 bis 3, **dadurch gekennzeichnet, dass** eine oder die Transpondereinheit (12) an einer, insbesondere in Gebrauchsstellung der Bearbeitungseinheit (3) der Basisstation (2) zugewandten, Außenseite (26) der Behälterwandung (14) und/oder an einer Außenseite (26) eines Behälterbodens (25) angeordnet ist und/oder dass eine oder die Empfangseinheit (11) an einem Sockel (20) der Basisstation (2) zum Aufsetzen der Bearbeitungseinheit (3) auf die Basisstation (2), insbesondere in einem Durchbruch (21) an der Oberseite des Sockels (20), angeordnet ist.

5. Vorrichtung (1) nach einem der Ansprüche 1 bis 4, **dadurch gekennzeichnet, dass** die Sensorvorrichtung (13) zumindest mit einem Teil des Drahtlosmoduls (7), insbesondere mit einer oder der Transpondereinheit (12), verbunden ist, insbesondere elektrisch verbunden ist, oder zusammen als eine Transponder-Sensor-Einheit ausgebildet ist und/oder dass zumindest ein Teil der Sensorvorrichtung (13), insbesondere ein Sensorelement (27), vorzugsweise ein Sensorstift, mit dem Medium im Inneren des Behälters (5) in Kontakt kommt und/oder im Innenraum (23) des Behälters (5) angeordnet ist, vorzugsweise derart, dass zumindest ein Teil der Sensorvorrichtung (13), insbesondere ein Sensorelement (27), vorzugsweise ein Sensorstift, eine Aussparung (24) in einer Behälterwandung (14) des Behälters (5) durchsetzt und so an oder in einen Innenraum (23) des Behälters (5) reicht.

6. Vorrichtung (1) nach einem der Ansprüche 1 bis 5, **dadurch gekennzeichnet, dass** eine oder die Transpondereinheit (12) thermisch isoliert von zumindest einem Teil der Sensorvorrichtung (13), insbesondere thermisch isoliert von einem oder dem Sensorelement (27), ist und/oder dass eine oder die Transpondereinheit (12) gegenüber der Behälterwandung (23) thermisch isoliert ist, vorzugsweise dass die Transpondereinheit (12) zur thermischen Isolierung von einer Kunststoffschicht umschlossen ist.

7. Vorrichtung (1) nach einem der Ansprüche 1 bis 6, **dadurch gekennzeichnet, dass** die Bearbeitungseinheit (3) autoklavierbar ist und/oder dass zumindest ein Teil der Sensorvorrichtung (13), insbesondere ein oder das Sensorelement (27) beschichtet, ist.

8. Vorrichtung (1) nach einem der Ansprüche 1 bis 7, **dadurch gekennzeichnet, dass** die Bearbeitungseinheiten (3) unterschiedliche Werkzeuge (4) aufweisen und/oder dass die Basisstation (2) einen Antrieb (8), insbesondere zum Antreiben des Werkzeuges (4) der zumindest einen Bearbeitungseinheit (3), aufweist.

9. Vorrichtung (1) nach einem der Ansprüche 1 bis 8, **dadurch gekennzeichnet, dass** die Bearbeitungsprogramme jeweils mehreren und/oder unterschiedlichen Bearbeitungseinheiten (3) zugewiesen sind und/oder dass die Basisstation (2) dazu eingerichtet ist, dass mittels des spezifischen Erkennungssignals ein bestimmtes, für die Bearbeitungseinheit (3) zugelassenes Bearbeitungsprogramm, aus dem Programmspeicher, vorzugsweise automatisch, einstellbar ist, insbesondere derart, dass durch das bestimmte Bearbeitungsprogramm eine Bearbeitungszeit und/oder eine bestimmte Bearbeitungsintensität einstellbar oder vorgebbar sind.

10. Vorrichtung (1) nach einem der Ansprüche 1 bis 9, **dadurch gekennzeichnet, dass** eine oder die Transpondereinheit (12) als RFID-Transponder (12), insbesondere mit einem Datenspeicher und einer Antenne zum Senden und/oder Empfangen von Daten, eingerichtet ist und/oder dass eine oder die Empfangseinheit (11) als RFID-Empfangseinheit, insbesondere als ein RFID-Lesegerät oder als ein RFID-Lese-/Schreibgerät, eingerichtet ist.

11. Vorrichtung (1) nach einem der Ansprüche 1 bis 10, **dadurch gekennzeichnet, dass** die Sensorvorrichtung (13) einen oder mehrere Sensoren ausgewählt aus der Gruppe bestehend aus Temperatursensor, pH-Sensor, Feuchtigkeitssensor und/oder Drucksensor aufweist.

12. Vorrichtung (1) nach einem der Ansprüche 1 bis 11, **dadurch gekennzeichnet, dass** die Bearbeitungseinheit (3) als Blendereinheit, Mühleneinheit, Mischeinheit und/oder Kneteinheit ausgebildet ist.

## Claims

1. Device (1) having a base station (2) and at least one processing unit (3) that can be detached from the base station (2) and has a tool (4) for processing a medium, wherein the processing unit (3) has a vessel (5) for receiving the medium, a closure unit (6) for closing the vessel (5) and a sensor device (13) for measuring at least one parameter of the medium, wherein at least a portion of the sensor device (13) is disposed in and/or on the vessel (5) in a stationary manner such that a parameter can be measured during the simultaneous processing of the medium, and wherein the device (1) has a wireless module (7) for producing a wireless connection and at least for transmitting data between the base station (2) and the processing unit (3), wherein the device (1) has a plurality of functionally different processing units (3), each processing unit (3), by means of coding stored on a transponder unit (12), is assigned a specific identification signal so that the base station (2) can identify the respective processing unit (3), wherein the base station (2) has a program memory having a plurality of processing programs, and wherein the base station (2) is configured in a manner such that, by means of the specific identification signal, a specific processing program can be selected from the program memory, **characterized in that** a maximum operating time of a or each processing unit (3) can be captured and/or stored by means of the transponder unit (12), with the result that a maximum operating time can be defined for a or each processing unit (3), wherein the base station (2) can detect when this maximum operating time is reached.

2. Device (1) according to Claim 1, **characterized in that** the wireless module (7) consists of a or the transponder unit (12) and a receiving unit (11), wherein an electronic coupling can be established between the transponder unit (12) and the receiving unit (11) at least for transmitting data, in particular for sending data from the receiving unit (11) to the transponder unit (12) and/or for receiving data sent from the transponder unit (12) by means of the receiving unit (11), and/or for supplying energy to the transponder unit (12), in particular by means of radio waves from the receiving unit (11).

3. Device (1) according to Claim 1 or 2, **characterized in that** the processing unit (3) has a or the transponder unit (12) and the base station (2) has a receiving unit (11), and/or **in that** the base station (2) has a or the transponder unit (12) and the processing unit (3) has a receiving unit (11).

4. Device (1) according to one of Claims 1 to 3, **characterized in that** a or the transponder unit (12) is disposed on an outer side (26) of the vessel wall (14) and/or on an outer side (26) of a vessel bottom (25), in particular an outer side facing the base station (2) when the processing unit (3) is in the operating position, and/or **in that** a or the receiving unit (11) is disposed on a base (20) of the base station (2) to position the processing unit (3) on the base station (2), in particular in an aperture (21) on the top of the base (20) .

5. Device (1) according to one of Claims 1 to 4, **characterized in that** the sensor device (13) is connected to at least a portion of the wireless module (7), in particular to a or the transponder unit (12), in particular electrically connected, or is configured together as a transponder-sensor unit, and/or **in that** at least a portion of the sensor device (13), in particular a sensor element (27), preferably a sensor pin, comes into contact with the medium inside the vessel (5) and/or is disposed in the internal space (23) of the vessel (5), preferably in a manner such that at least a portion of the sensor device (13), in particular a sensor element (27), preferably a sensor pin, passes through an opening (24) in a vessel wall (14) of the vessel (5) and thus extends to or into an internal space (23) of the vessel (5).

6. Device (1) according to one of Claims 1 to 5, **characterized in that** a or the transponder unit (12) is thermally insulated from at least a portion of the sensor device (13), in particular thermally insulated from a or the sensor element (27), and/or **in that** a or the transponder unit (12) is thermally insulated from the vessel wall (23), preferably **in that** the transponder unit (12) is enclosed by a layer of plastic for the purposes of thermal insulation.

7. Device (1) according to one of Claims 1 to 6, **characterized in that** the processing unit (3) is capable of being autoclaved, and/or **in that** at least a portion of the sensor device (13), in particular a or the sensor element (27), is coated.

8. Device (1) according to one of Claims 1 to 7, **characterized in that** the processing units (3) have different tools (4), and/or **in that** the base station (2) has a drive (8), in particular to drive the tool (4) of the at least one processing unit (3).

9. Device (1) according to one of Claims 1 to 8, **characterized in that** the processing programs are each assigned to a plurality of and/or different processing units (3), and/or **in that** the base station (2) is configured in a manner such that, by means of the specific identification signal, a specific processing program approved for the processing unit (3) can be selected from the program memory, preferably automatically, in particular in such a manner that a processing time and/or a specific processing intensity can be set or specified by the specific processing program.

10. Device (1) according to one of Claims 1 to 9, **characterized in that** a or the transponder unit (12) is configured as an RFID transponder (12), in particular with a data memory and an antenna for transmitting and/or receiving data, and/or **in that** a or the receiving unit (11) is configured as an RFID receiving unit, in particular as an RFID read device or as an RFID read/write device.

11. Device (1) according to one of Claims 1 to 10, **characterized in that** the sensor device (13) has one or more sensors selected from the group consisting of temperature sensor, pH sensor, moisture sensor and/or pressure sensor.

12. Device (1) according to one of Claims 1 to 11, **characterized in that** the processing unit (3) is configured as a blender unit, grinder unit, mixing unit and/or kneading unit.

## Revendications

1. Dispositif (1) comprenant une station de base (2) et au moins une unité de traitement (3) qui peut être détachée de la station de base (2) et qui est dotée d'un outil (4) pour le traitement d'un milieu, dans lequel l'unité de traitement (3) comprend un récipient (5) pour la réception du milieu, une unité de fermeture (6) pour la fermeture du récipient (5) et un dispositif de détection (13) pour la mesure d'au moins un paramètre du milieu, dans lequel au moins une partie du dispositif de détection (13) est disposée de manière fixe dans et/ou sur le récipient (5) de telle sorte qu'une mesure d'un paramètre puisse être effectuée pendant le traitement simultané du milieu, dans lequel le dispositif (1) comprend un module sans fil (7) pour l'établissement d'une liaison sans fil et au moins pour la transmission de données entre la station de base (2) et l'unité de traitement (3), dans lequel le dispositif (1) comprend plusieurs unités de traitement (3) différentes sur le plan fonctionnel, dans lequel un signal d'identification spécifique pour l'identification de l'unité de traitement (3) respective par la station de base (2) est associé à chaque unité de traitement (3) par l'intermédiaire d'un codage mémorisé sur une unité de transpondeur (12), dans lequel la station de base (2) comprend une mémoire de programme contenant plusieurs programmes de traitement, et dans lequel la station de base (2) est conçue de telle sorte qu'un programme de traitement déterminé puisse être réglé à partir de la mémoire de programme à l'aide du signal d'identification spécifique, **caractérisé en ce que** l'unité de transpondeur (12) permet de détecter et/ou de mémoriser un temps maximal de fonctionnement d'une ou de plusieurs unité(s) de traitement (3), de telle sorte qu'un temps maximal de fonctionnement puisse être défini pour une ou chaque unité de traitement (3), dans lequel la définition de ce temps maximal de fonctionnement peut être identifiée par la station de base (2).

2. Dispositif (1) selon la revendication 1, **caractérisé en ce que** le module sans fil (7) est constitué d'une ou de l'unité de transpondeur (12) et d'une unité de réception (11), dans lequel un couplage électronique peut être conçu entre l'unité de transpondeur (12) et l'unité de réception (11) au moins pour la transmission de données, en particulier pour l'émission de données de l'unité de réception (11) à l'unité de transpondeur (12) et/ou pour la réception par l'unité de réception (11) des données émises par l'unité de transpondeur (12), et/ou pour l'alimentation en énergie de l'unité de transpondeur (12), en particulier par l'intermédiaire d'ondes radio de l'unité de réception (11).

3. Dispositif (1) selon la revendication 1 ou 2, **caractérisé en ce que** l'unité de traitement (3) comprend une ou l'unité de transpondeur (12) et la station de base (2) comprend une unité de réception (11) et/ou **en ce que** la station de base (2) comprend une ou l'unité de transpondeur (12) et l'unité de traitement (3) comprend une unité de réception (11).

4. Dispositif (1) selon l'une quelconque des revendications 1 à 3, **caractérisé en ce que** une ou l'unité de transpondeur (12) est disposée sur un côté extérieur (26) de la paroi (14) du récipient, en particulier en position d'utilisation de l'unité de traitement (3), tourné vers la station de base (2) et/ou sur un côté extérieur (26) d'un fond (25) du récipient et/ou **en ce que** une ou l'unité de réception (11) est disposée sur un socle (20) de la station de base (2) pour poser l'unité de traitement (3) sur la station de base (2), en particulier dans une ouverture (21) sur la face supérieure du socle (20).

5. Dispositif (1) selon l'une quelconque des revendications 1 à 4, **caractérisé en ce que** le dispositif de détection (13) est relié, en particulier électriquement, à au moins une partie du module sans fil (7), en particulier à une ou à l'unité de transpondeur (12), ou se présente conjointement sous la forme d'une unité de transpondeur - détecteur et/ou **en ce que** au moins une partie du dispositif de détection (13), en particulier un élément de détection (27), de préférence une sonde de détection, entre en contact avec le milieu à l'intérieur du récipient (5) et/ou est disposé à l'intérieur de l'espace intérieur (23) du récipient (5), de préférence de telle sorte qu'au moins une partie du dispositif de détection (13), en particulier un élément de détection (27), de préférence une sonde de détection, traverse un évidement (24) dans une paroi (14) du récipient (5) et arrive ainsi à ou à l'intérieur d'un espace intérieur (23) du récipient (5).

6. Dispositif (1) selon l'une quelconque des revendications 1 à 5, **caractérisé en ce que** une ou l'unité de transpondeur (12) est isolée thermiquement d'au moins une partie du dispositif de détection (13), en particulier isolée thermiquement d'un ou de l'élément de détection (27) et/ou **en ce que** une ou l'unité de transpondeur (12) est isolée thermiquement par rapport à la paroi du récipient (23), de préférence **en ce que** l'unité de transpondeur (12) est entourée d'une couche de matière plastique pour l'isolation thermique.

7. Dispositif (1) selon l'une quelconque des revendications 1 à 6, **caractérisé en ce que** l'unité de traitement (3) peut être autoclavée et/ou **en ce que** au moins une partie du dispositif de détection (13), en particulier un ou l'élément de détection (27), est recouverte.

8. Dispositif (1) selon l'une quelconque des revendications 1 à 7, **caractérisé en ce que** l'unité de traitement (3) comprend différents outils (4) et/ou **en ce que** la station de base (2) comprend un entraînement (8), en particulier pour l'entraînement de l'outil (4) de ladite au moins une unité de traitement (3).

9. Dispositif (1) selon l'une quelconque des revendications 1 à 8, **caractérisé en ce que** les programmes de traitement sont respectivement affectés à plusieurs et/ou à différentes unités de traitement (3) et/ou **en ce que** la station de base (2) est conçue de telle sorte qu'un programme de traitement déterminé, approuvé pour l'unité de traitement (3), puisse être réglé de préférence automatiquement à partir de la mémoire de programme à l'aide du signal d'identification spécifique, en particulier de telle sorte qu'un programme de traitement déterminé permette de régler ou de prédéterminer un temps de traitement et/ou une intensité de traitement déterminé(es).

10. Dispositif (1) selon l'une quelconque des revendications 1 à 9, **caractérisé en ce que** une ou l'unité de transpondeur (12) est conçue en tant que transpondeur RFID (12), en particulier avec une mémoire de données et une antenne pour l'émission et/ou la réception de données et/ou **en ce que** une ou l'unité de réception (11) est conçue en tant qu'unité de réception RFID, en particulier en tant qu'appareil de lecture RFID ou en tant qu'appareil de lecture/écriture RFID.

11. Dispositif (1) selon l'une quelconque des revendications 1 à 10, **caractérisé en ce que** le dispositif de détection (13) comprend un ou plusieurs capteur(s) qui est (sont) sélectionné(s) dans le groupe comprenant un capteur de température, un capteur de pH, un capteur d'humidité et/ou un capteur de pression.

12. Dispositif (1) selon l'une quelconque des revendications 1 à 11, **caractérisé en ce que** l'unité de traitement (3) se présente sous la forme d'une unité de mixage, d'une unité de broyage, d'une unité de mélange et/ou d'une unité de malaxage.
